# EUROPEAN PATENT SPECIFICATION

(11) **EP 4 342 758 B1**
(45) Date of publication and mention of the grant of the patent: **11.03.2026**
(21) Application number: 23164226.5
(22) Date of filing: 27.03.2023
(51) Int. Cl.: B60W 40/09, B60W 50/14, B60W 40/08

(54) **DRIVER STATE DETERMINATION APPARATUS**
VORRICHTUNG ZUR BESTIMMUNG DES FAHRERZUSTANDS
APPAREIL DE DÉTERMINATION D'ÉTAT DE CONDUCTEUR

(30) Priority: 22.09.2022 JP 2022151226
(43) Date of publication of application: 27.03.2024
(73) Proprietor: MAZDA MOTOR CORPORATION, Hiroshima 730-8670 (JP)
(72) Inventor: Iwase, Koji, Aki-gun, Hiroshima, 730-8670 (JP); Iwashita, Yohei, Aki-gun, Hiroshima, 730-8670 (JP)
(74) Representative: Lorenz Seidler Gossel Part. mbB

(56) References cited:
- WO-A1-2022/071851
- DE-A1- 102016 000 220
- US-A1- 2021 188 162

## Description

### [Technical Field]

The present invention relates to a driver state determination apparatus that determines a state of a driver who drives a vehicle.

### [Background Art]

One of main causes of traffic accidents is a state where a driver lacks concentration on driving, that is, a so-called distracted state. Conventionally, as techniques for detecting the distracted state, the following techniques have been proposed: a technique of focusing on change amounts of the driver's face direction and sightline direction (for example, see Patent document 1), a technique of focusing on the number of times of visual recognition behavior (for example, see Patent document 2), a technique of focusing on the driver's degree of concentration and degree of comfort on driving (for example, see Patent document 3), and the like.
US 2021/188162 A1 discloses a vehicle state alert apparatus including a vehicle exterior alert apparatus capable of making an alert to a person outside the vehicle. A state determiner determines a state of a driver of the vehicle and a state of the vehicle. An alert controller causes the vehicle exterior alert apparatus to make a state alert. WO 2022/071851 A1 describes a method for calculating a driving performance observation for a driver driving a vehicle.

### [Prior Art Documents]

### [Patent documents]

[Patent document 1] JP-A-2020-086907
[Patent document 2] JP-A-2019-121227
[Patent document 3] JP-B-6380464

### [Summary of the Invention]

### [Problem to be solved by the invention]

However, in the related art as described above, even in the case where, due to a mild disease, aging, or the like, the change amounts of the driver's face direction and sightline direction or the number of times of the visual recognition behavior is reduced, or the driver's degree of concentration on driving is reduced, it may be determined that the driver is in the distracted state. In other words, in the related art, it is impossible to distinguish the driver's distracted state from another abnormal state of the driver, such as the disease, and accurately determine the driver's distracted state.

The invention has been made to solve such a problem and therefore has a purpose of providing a driver state determination apparatus capable of distinguishing a driver's distracted state from another abnormal state of the driver, such as a disease, and promptly and accurately determining the driver's distracted state.

### [Means for solving the Problem]

In order to solve the above-described problem, the invention is a driver state determination apparatus that determines a state of a driver who drives a vehicle, and includes: a travel environment information acquisition device that acquires travel environment information of the vehicle; a sightline detector that detects the driver's sightline; and a controller configured to determine the driver's state on the basis of the travel environment information and the driver's sightline. The controller is configured to: acquire a driving load score on the basis of the travel environment information, the driving load score representing a magnitude of a load on the driver during driving of the vehicle; acquire a distracted state occurrence score on the basis of the driving load score and an elapsed time with the driving load score, the distracted state occurrence score representing a degree of likelihood that the driver is brought into a distracted state; acquire a search behavior score on the basis of the travel environment information and the driver's sightline in the case where the distracted state occurrence score is equal to or higher than a specified value, the search behavior score representing a degree of normality of search behavior by the driver's visual perception; acquire a distracted state level of the driver on the basis of the search behavior score and an elapsed time with the search behavior score; and determine that the driver is in the distracted state in the case where the distracted state level is equal to or higher than a threshold and where the search behavior score is increased in response to an increase in the driving load score.

According to the invention that is configured as described above, the controller acquires the distracted state occurrence score, which represents the degree of likelihood that the driver is brought into the distracted state, on the basis of the driving load score and the elapsed time with the driving load score. Thus, in a situation where the driver is likely to be in the distracted state according to the driving load, it is possible to promptly determine whether the driver is in the distracted state. In addition, in the case where the distracted state occurrence score is equal to or higher than the specified value, the controller acquires the search behavior score, which represents the degree of normality of the search behavior by the driver's visual perception, on the basis of the travel environment information and the driver's sightline. Then, the controller acquires the distracted state level of the driver on the basis of the search behavior score and the elapsed time with the search behavior score. Thus, it is possible to promptly determine the distracted state on the basis of the degree of normality of the search behavior, which is easily affected by the distracted state. Furthermore, in the case where the distracted state level is equal to or higher than the threshold, and the search behavior score is increased in response to the increase in the driving load score, the controller determines that the driver is in the distracted state. Thus, it is possible to accurately determine the distracted state by focusing on a change that appears characteristically at the time when the driver is in the distracted state but not in an abnormal state (that the search behavior becomes normal when the driving load is increased and thus a behavior request for the driver is enhanced) and distinguishing such a change from a change in the abnormal state. In this way, it is possible to distinguish the driver's distracted state from another abnormal state, such as a disease, and promptly and accurately determine the driver's distracted state.

In the invention, preferably, the controller is configured to: acquire a cognitive load score, which represents a magnitude of a load on the driver to recognize an object in travel environment of the vehicle, and an operation load score, which represents a magnitude of a load to operate the vehicle in the travel environment, on the basis of the travel environment information; and acquire the driving load score on the basis of the cognitive load score and the operation load score.

According to the invention that is configured as described above, the controller acquires the driving load score on the basis of the cognitive load score and the operation load score. Thus, it is possible to evaluate a magnitude of the driving load in consideration of a cognitive load and an operation load, which affect likelihood of occurrence of the distracted state. Thus, it is possible to acquire the further accurate distracted state occurrence score.

In the invention, preferably, the controller is configured to: acquire a surprise value, which represents a distance between a predicted position and an actual position of the object that attracts the driver's attention, on the basis of the travel environment information; and calculate the search behavior score such that the search behavior score is increased as a tendency of the driver's sightline to be directed to the object with the relatively high surprise value is increased.

According to the invention that is configured as described above, the controller calculates the driver's search behavior score on the basis of a behavioral principle of a person that the driver in a normal state directs his/her sightline to the object with the relatively high surprise value. Thus, it is possible to acquire the search behavior score, to which the driver's state is further accurately reflected.

In the invention, preferably, the travel environment information acquisition device may include at least one of an outside camera, a radar, a navigation system or a positioning system. Preferably, the sensor data of at least one of additional sensors may be used for determining the driving load score and/or the cognitive load score and/or the operation load score. The additional sensors may include a vehicle speed sensor and/or a acceleration sensor and/or a yaw rate sensor and/or a steering angle sensor and/or a steering torque sensor and/or an accelerator sensor and/or a brake sensor.

In the invention, preferably, the sightline detector may be an in-vehicle camera. The controller may be adapted to detect the driver's sightline direction on the basis of the image data received from the in-vehicle camera.

In the invention, preferably, the controller may be configured to acquire the cognitive load score by use of a cognitive load score table stored in a memory in advance. In the cognitive load score table factors, each of which affects the driver's cognitive load, are associated with scores, each of which represents a magnitude of the cognitive load corresponding to each of the factors. At least one of a number of the objects to be seen by the driver during driving, an angle between the objects, a degree of saliency of the object or a moving speed of the object may represent a factor.

In the invention, preferably, the controller may be configured to acquire the operation load score by use of an operation load score table stored in a memory in advance. In the operation load score table, factors, each of which affects the driver's operation load, may be each associated with scores, each of which represents a magnitude of the operation load corresponding to each of the factors. Preferably, at least one of a radius of curvature of a road curve, a presence or absence of loss of an own lane, a signal color and deceleration of the preceding vehicle may represent a factor.

In the invention, preferably, the controller may be configured to acquire the distracted state occurrence score by use of a distracted state occurrence score map in which a distracted state occurrence score is stored in the memory in advance. In the table, the distracted state occurrence score is preferably increased as the driving load score is reduced and the distracted state occurrence score is preferably increased as the elapsed time is increased.

As already mentioned above, the controller may be configured to acquire a surprise value. For acquiring said surprise value, the controller may be configured to, based on the signals received from the outside camera and the radar, identify a position of a visual recognition required object that should be recognized visually by the driver and/or a distribution of saliency in front of the vehicle. The controller may be further configured to calculate the predicted position after a specified time of each of the identified position of the visual recognition required object and a saliency distribution.

In the invention, preferably, the controller may be configured to determine that the driver is in a normal state if the distracted state level is not equal to or higher than the threshold. If the normal state is determined the controller may terminate the driver state determination processing.

In the invention, preferably, the controller may be configured to store the driving load score, the search behavior score and the time of acquisition of each thereof every time the controller acquires the driving load score and the search behavior score in the driver state determination processing. Furthermore, the controller may be configured to identify in time-series data of a change in the search behavior score in a period in which the increased state of the driving load score is maintained. The controller may be adapted to determine that the search behavior score is increased in response to an increase in the driving load score when the search behavior score is increased while the increased state of the driving load score is maintained.

In the invention, preferably, the controller may configured to transmit a control signal to a display and/or a speaker of the vehicle. Such control signal is capable of causing a warning output on the display and/or by the speaker for notifying the driver about detection of the distracted state. In particular, the controller may be configured to cause the display and/or the speaker to respectively output an image information and/or a voice information for guiding the driver's sightline to the visual recognition required object not visually recognized by the driver.

In the invention, preferably, the controller may be configured to determine that the driver is in an abnormal state, when the distracted state level is equal to or higher than a threshold and when the search behavior score is not increased, in particular is below a defined upper threshold, in response to an increase in the driving load score. An abnormal state me be represented by a situation in which the driver suffers from a disease. Furthermore, the controller may be configured to generate and transmit a control signal for safely stopping the vehicle.

The invention is further directed to a vehicle including at least one driver state determination apparatus according to the invention.

The above-described problem is also solved by a method of determining a state of a driver. The method may be performed by use of a driver state determination apparatus according to the invention. The method comprises the steps of: acquiring travel environment information of the vehicle (1); detecting the a driver's sightline; and determining the driver's state on the basis of the travel environment information and the driver's sightline; acquiring a driving load score on the basis of the travel environment information, the driving load score representing a magnitude of a load on the driver during driving of the vehicle; acquiring a distracted state occurrence score on the basis of the driving load score and an elapsed time with the driving load score, the distracted state occurrence score representing a degree of likelihood that the driver is brought into a distracted state; acquiring a search behavior score on the basis of the travel environment information and the driver's sightline in the case where the distracted state occurrence score is equal to or higher than a specified value, the search behavior score representing a degree of normality of search behavior by the driver's visual perception; acquiring a distracted state level of the driver on the basis of the search behavior score and an elapsed time with the search behavior score; and determining that the driver is in the distracted state in the case where the distracted state level is equal to or higher than a threshold and where the search behavior score is increased in response to an increase in the driving load score.

### [Advantage of the invention]

According to the driver state determination apparatus in the invention, it is possible to distinguish the driver's distracted state from the other abnormal state, such as the disease, and promptly and accurately determine the driver's distracted state.

### [Brief Description of the Drawings]

[Fig. 1] Fig. 1 is an explanatory view of a vehicle on which a driver state determination apparatus according to an embodiment of the invention is mounted.
[Fig. 2] Fig. 2 is a block diagram of the driver state determination apparatus according to the embodiment of the invention.
[Fig. 3] Fig. 3 is a flowchart of driver state determination processing according to the embodiment of the invention.
[Fig. 4] Fig. 4 is a table exemplifying a cognitive load score table according to the embodiment of the invention.
[Fig. 5] Fig. 5 is a table exemplifying an operation load score table according to the embodiment of the invention.
[Fig. 6] Fig. 6 is a map exemplifying a driving load score map according to the embodiment of the invention.
[Fig. 7] Fig. 7 is a map exemplifying a distracted state occurrence score map according to the embodiment of the invention.
[Fig. 8] Fig. 8 is a map exemplifying a distracted state level map according to the embodiment of the invention.
[Fig. 9] Fig. 9 is a graph illustrating a change in a search behavior score at the time with a high driving load according to the embodiment of the invention.

### [Modes for Carrying Out the Invention]

A description will hereinafter be made on a driver state determination apparatus according to an embodiment of the invention with reference to the accompanying drawings.

### [System Configuration]

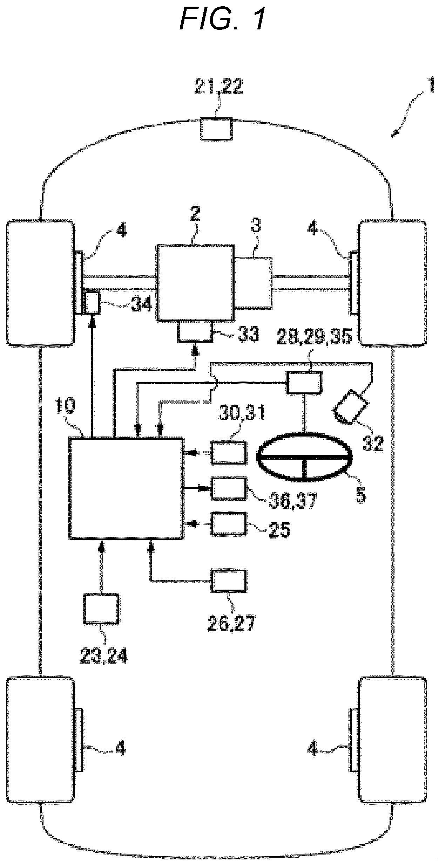

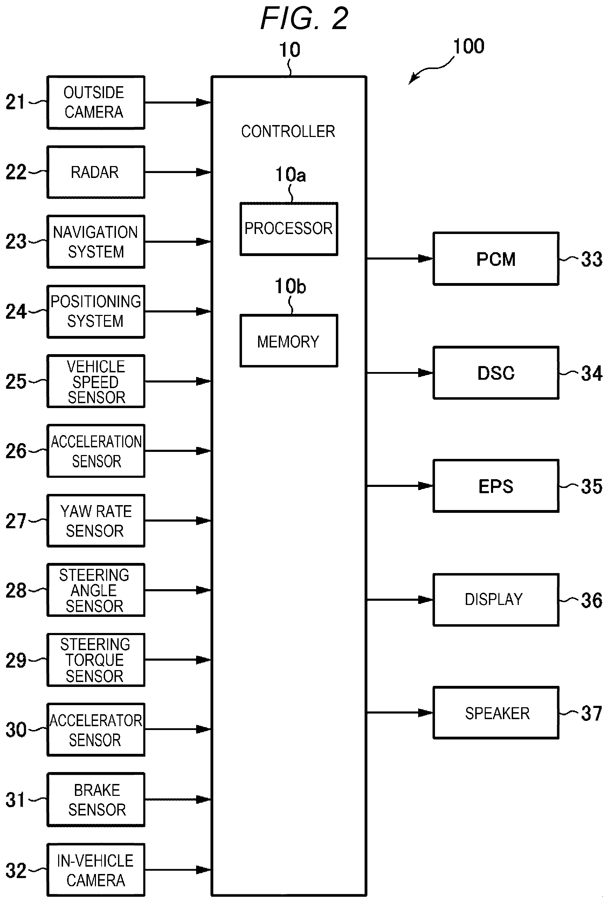

First, a description will be made on a configuration of the driver state determination apparatus according to this embodiment with reference to Fig. 1 and Fig. 2. Fig. 1 is an explanatory view of a vehicle on which the driver state determination apparatus is mounted, and Fig. 2 is a block diagram of the driver state determination apparatus.

A vehicle 1 according to this embodiment includes: drive power sources 2 such as an engine and an electric motor that output drive power; a transmission 3 that transmits the drive power output from the drive power source 2 to drive wheels; a brake 4 that applies a braking force to the vehicle 1; and a steering device 5 for steering the vehicle 1.

A driver state determination apparatus 100 is configured to determine a state of a driver of the vehicle 1 and to execute control of the vehicle 1 and driving assistance control when necessary. As illustrated in Fig. 2, the driver state determination apparatus 100 has a controller 10, plural sensors, plural control systems, and plural information output devices.

More specifically, the plural sensors include an outside camera 21 and a radar 22 for acquiring travel environment information of the vehicle 1 as well as a navigation system 23 and a positioning system 24 for detecting a position of the vehicle 1. The plural sensors also include a vehicle speed sensor 25, an acceleration sensor 26, a yaw rate sensor 27, a steering angle sensor 28, a steering torque sensor 29, an accelerator sensor 30, and a brake sensor 31 for detecting behavior of the vehicle 1 and the driver's driving operation. The plural sensors further include an in-vehicle camera 32 for detecting the driver's sightline. The plural control systems include: a powertrain control module (PCM) 33 that controls the drive power source 2 and the transmission 3; a dynamic stability control system (DSC) 34 that controls the drive power source 2 and the brake 4; and an electric power steering system (EPS) 35 that controls the steering device 5. The plural information output devices include a display 36 that outputs image information and a speaker 37 that outputs voice information.

In addition, as other sensors, a peripheral sonar system that measures a distance and a position of a peripheral structure relative to the vehicle 1, a corner radar that measures approach of the peripheral structure at each of four corner sections of the vehicle 1, and various sensors (for example, a heart rate sensor, an electrocardiogram sensor, a steering wheel grip force sensor, and the like) that detect the driver's state may be included.

The controller 10 executes various arithmetic operations on the basis of signals received from the plural sensors, transmits, to the PCM 33, the DSC 34, and the EPS 35, a control signal for appropriately actuating the drive power source 2, the transmission 3, the brake 4, and the steering device 5, and transmits, to the display 36 and the speaker 37, a control signal for outputting desired information. The controller 10 is a computer that includes one or more processors 10a (typically, a CPU), memory 10b (ROM, RAM, and the like) that stores various programs and data, an input/output device, and the like.

The outside camera 21 captures an image around the vehicle 1 and outputs image data. The controller 10 identifies an object (for example, a preceding vehicle, a parked vehicle, a pedestrian, a travel road, a lane marking (a lane divider, a white line, or a yellow line), a traffic signal, a traffic sign, a stop line, an intersection, an obstacle, or the like) on the basis of the image data received from the outside camera 21. The outside camera 21 corresponds to an example of the "travel environment information acquisition device" in the invention.

The radar 22 measures a position and a speed of the object (particularly, the preceding vehicle, the parked vehicle, the pedestrian, a dropped object on the travel road, or the like). For example, a millimeter-wave radar can be used as the radar 22. The radar 22 transmits a radio wave in an advancing direction of the vehicle 1, and receives a reflected wave that is generated when the object reflects the transmitted wave. Then, based on the transmitted wave and the received wave, the radar 22 measures a distance between the vehicle 1 and the object (for example, an inter-vehicular distance) and a relative speed of the object to the vehicle 1. In this embodiment, instead of the radar 22, a laser radar, an ultrasonic sensor, or the like may be used to measure the distance from and the relative speed of the object. Alternatively, the plural sensors may be used to constitute a position and speed measuring device. The radar 22 corresponds to an example of the "travel environment information acquisition device" in the invention.

The navigation system 23 stores map information therein and can provide the map information to the controller 10. Based on the map information and current vehicle position information, the controller 10 identifies a road, the intersection, the traffic signal, a building, or the like that exists around (particularly, in the advancing direction of) the vehicle 1. The map information may be stored in the controller 10. The positioning system 24 is a GPS system and/or a gyroscopic system, and detects the position of the vehicle 1 (the current vehicle position information). Each of the navigation system 23 and the positioning system 24 also corresponds to an example of the "travel environment information acquisition device" in the invention.

The vehicle speed sensor 25 detects a speed of the vehicle 1 on the basis of a rotational speed of the wheel or a driveshaft, for example. The acceleration sensor 26 detects acceleration of the vehicle 1. This acceleration includes acceleration in a front-rear direction of the vehicle 1 and acceleration in a lateral direction (that is, lateral acceleration) thereof. In the present specification, the acceleration includes not only a change rate of the speed in a speed increasing direction but also a change rate of the speed in a speed reducing direction (that is, deceleration) .

The yaw rate sensor 27 detects a yaw rate of the vehicle 1. The steering angle sensor 28 detects a rotation angle (a steering angle) of the steering wheel of the steering device 5. The steering torque sensor 29 detects torque (steering torque) applied to a steering shaft via the steering wheel. The accelerator sensor 30 detects a depression amount of an accelerator pedal. The brake sensor 31 detects a depression amount of a brake pedal.

The in-vehicle camera 32 captures an image of the driver and outputs image data. The controller 10 detects the driver's sightline direction on the basis of the image data that is received from the in-vehicle camera 32. The in-vehicle camera 32 corresponds to an example of the "sightline detector" in the invention.

The PCM 33 controls the drive power source 2 of the vehicle 1 to adjust the drive power of the vehicle 1. For example, the PCM 33 controls an ignition plug of the engine, a fuel injection valve, a throttle valve, a variable valve mechanism, the transmission 3, an inverter that supplies electric power to the electric motor, and the like. When the vehicle 1 has to be accelerated or decelerated, the controller 10 transmits the control signal to the PCM 33 so as to adjust the drive power.

The DSC 34 controls the drive power source 2 and the brakes 4 of the vehicle 1 and thereby executes deceleration control and posture control of the vehicle 1. For example, the DSC 34 controls a hydraulic pump, a valve unit, and the like of the brake 4, and controls the drive power source 2 via the PCM 33. When it is necessary to execute the deceleration control or the posture control of the vehicle 1, the controller 10 transmits the control signal to the DSC 34 so as to adjust the drive power or generate the braking force.

The EPS 35 controls the steering device 5 of the vehicle 1. For example, the EPS 35 controls the electric motor, which applies the torque to the steering shaft of the steering device 5, and the like. When the advancing direction of the vehicle 1 has to be changed, the controller 10 transmits the control signal to the EPS 35 so as to change a steering direction.

The display 36 is provided in front of the driver in a cabin and displays the image information to the driver. As the display 36, for example, a liquid-crystal display or a head-up display is used. The speaker 37 is installed in the cabin and outputs various types of the voice information.

### [Driver State Determination Processing]

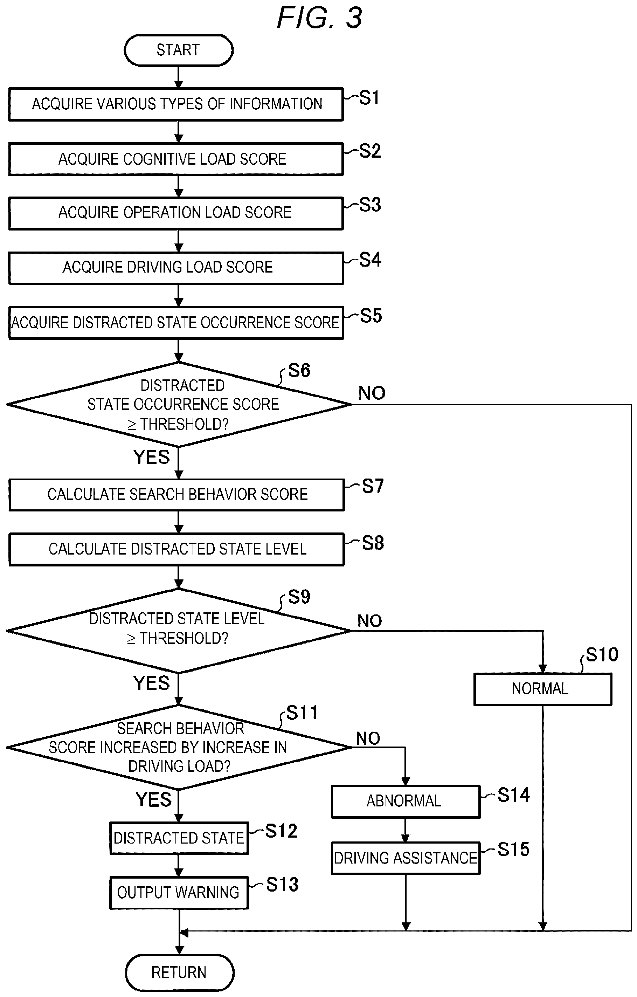

Next, a description will be made on a flow of driver state determination processing by the driver state determination apparatus 100 in this embodiment with reference to Fig. 3. Fig. 3 is a flowchart of the driver state determination processing.

The driver state determination processing is initiated when a power supply of the vehicle 1 is turned on. Then, the driver state determination processing is repeatedly executed by the controller 10 in a specified cycle (for example, every 0.05 to 0.2 second).

When the driver state determination processing is initiated, first, the controller 10 acquires various types of information including the travel environment information and the driver's sightline on the basis of the signals that are received from the sensors including the outside camera 21, the radar 22, the navigation system 23, the positioning system 24, and the in-vehicle camera 32 (step S1).

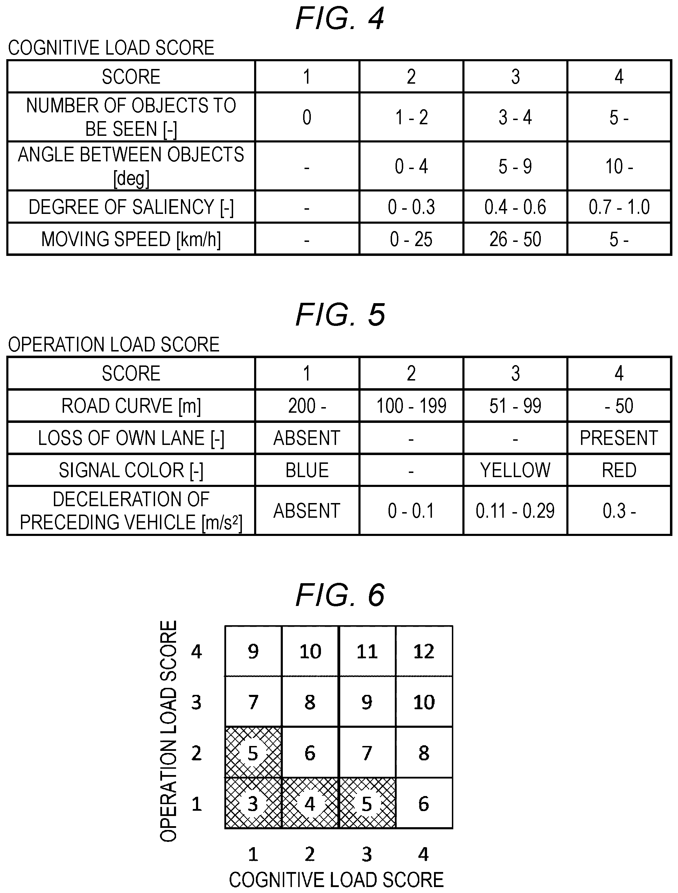

Next, based on the travel environment information acquired in step S1, the controller 10 acquires a cognitive load score that represents a magnitude of a load for the driver to recognize the object in the travel environment of the vehicle 1 (step S2). More specifically, a cognitive load score table is stored in the memory 10b in advance. In the cognitive load score table, factors, each of which affects the driver's cognitive load, are each associated with scores, each of which represents a magnitude of the cognitive load corresponding to each of the factors, in advance. Fig. 4 is a table exemplifying the cognitive load score table. In the example illustrated in Fig. 4, the number of the objects to be seen by the driver during driving, an angle between the objects, prominence (a degree of saliency) of the object, and a moving speed of the object are set as the factors (cognitive load factors), each of which affects the cognitive load. In addition, it is set that the cognitive load score is increased as the number of the objects to be seen is increased, as the angle between the objects is increased, as the degree of saliency of the object is increased, or as the moving speed of the object is increased. The controller 10 acquires a value of each of the cognitive load factors on the basis of the travel environment information that is acquired from the outside camera 21 and the radar 22. Then, the controller 10 calculates an average value of the cognitive load scores, each of which corresponds to the value of the respective cognitive load factor, as the cognitive load score in the current travel environment.

Next, based on the travel environment information acquired in step S1, the controller 10 acquires an operation load score that represents a magnitude of a load for the driver to operate the vehicle 1 in the travel environment of the vehicle 1 (step S3). More specifically, an operation load score table is stored in the memory 10b in advance. In the operation load score table, factors, each of which affects the driver's operation load, are each associated with scores, each of which represents a magnitude of the operation load corresponding to each of the factors, in advance. Fig. 5 is a table exemplifying the operation load score table. In the example illustrated in Fig. 5, a radius of curvature of a road curve, presence or absence of loss of an own lane, a signal color, and deceleration of the preceding vehicle are set as the factors (operation load factors), each of which affects the operation load. In addition, it is set that the operation load score is increased as the radius of curvature is reduced, that the operation load score is increased to be higher when the loss of the own lane is present than when the loss of the own lane is absent, that the operation load score is increased in an order of blue, yellow, and red of the signal color, and that the operation load score is increased as the deceleration of the preceding vehicle is increased. The controller 10 acquires a value of each of the operation load factors on the basis of the travel environment information that is acquired from the outside camera 21, the radar 22, the navigation system 23, and the positioning system 24. Then, the controller 10 calculates an average value of the operation load scores, each of which corresponds to the value of the respective operation load factor, as the operation load score in the current travel environment.

Next, the controller 10 calculates a driving load score on the basis of the cognitive load score acquired in step S2 and the operation load score acquired in step S3 (step S4). More specifically, a driving load score map in which a driving load score is set is stored in the memory 10b in advance. The driving load score corresponds to the cognitive load score and the operation load score. Fig. 6 is a map exemplifying the driving load score map. In the example illustrated in Fig. 6, it is set that the driving load score is increased as the cognitive load score is increased and that the driving load score is increased as the operation load score is increased. For example, in the case where the cognitive load score is 2 and the operation load score is 1, the driving load score is 4. In the case where the cognitive load score is 4 and the operation load score is 3, the driving load score is 10. The controller 10 refers to this driving load score map and acquires the driving load score that corresponds to the cognitive load score acquired in step S2 and the operation load score acquired in step S3.

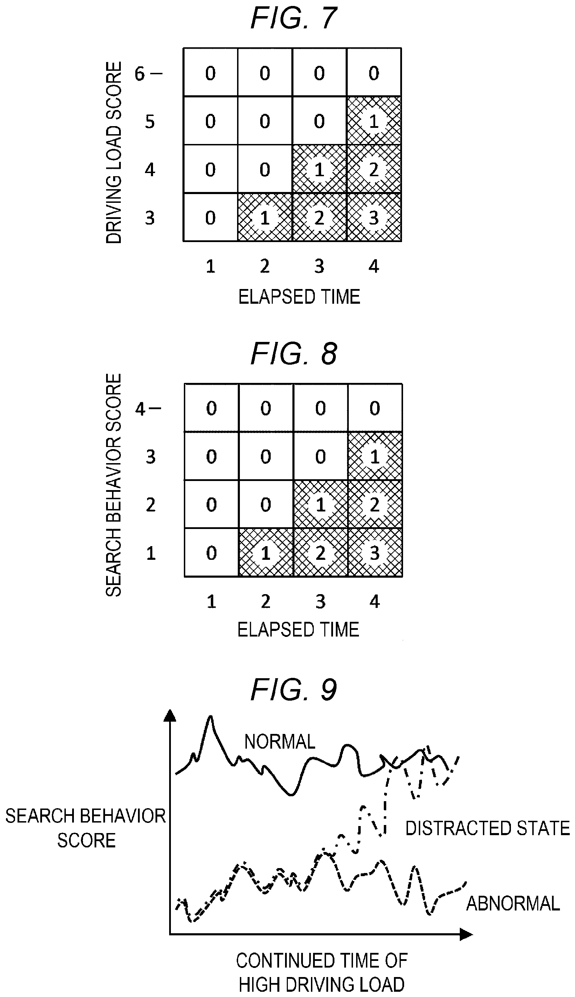

Next, based on the driving load score acquired in step S4 and an elapsed time with the driving load score, the controller 10 acquires a distracted state occurrence score representing a degree of likelihood that the driver is brought into the distracted state (step S5). More specifically, a distracted state occurrence score map in which a distracted state occurrence score is set is stored in the memory 10b in advance. The distracted state occurrence score corresponds to the driving load score and the elapsed time with the driving load score. Fig. 7 is a map exemplifying the distracted state occurrence score map. In the example illustrated in Fig. 7, it is set that the distracted state occurrence score is increased as the driving load score is reduced and that the distracted state occurrence score is increased as the elapsed time is increased. This is because, in the case where the low driving load continues for a long time, the driver is most likely to be brought into the distracted state. Every time the controller 10 acquires the driving load score in the driver state determination processing, which is executed repeatedly, the controller 10 stores the driving load score and time of acquisition. Then, after acquiring the driving load score in step S4, the controller 10 refers to the distracted state occurrence score map and acquires the distracted state occurrence score that corresponds to the driving load score acquired in step S4 and a time in which the driving load score remains the same (the elapsed time).

Next, the controller 10 determines whether the distracted state occurrence score acquired in step S5 is equal to or higher than a specified threshold (step S6). For example, in the case where the distracted state occurrence score map illustrated in Fig. 7 is used, the threshold is set to 1. As a result, if the distracted state occurrence score is not equal to or higher than the threshold (is lower than the threshold) (step S6: NO), the controller 10 determines that the driver is unlikely to be in the distracted state, and terminates the driver state determination processing.

On the other hand, if the distracted state occurrence score is equal to or higher than the threshold (step S6: YES), the controller 10 calculates a search behavior score on the basis of the travel environment information and the driver's sightline that are acquired in step S1 (step S7). The search behavior score represents a degree of normality of search behavior by the driver's visual perception.

More specifically, based on the signals received from the outside camera 21 and the radar 22, the controller 10 identifies a position of a visual recognition required object that should be recognized visually by the driver (the object that attracts top-down attention of the driver). The controller 10 also identifies distribution of the saliency (ease of attracting bottom-up attention of the driver) in front of the vehicle 1 on the basis of the signal received from the outside camera 21. Then, the controller 10 calculates a predicted position (probability distribution) after a specified time of each of the identified position of the visual recognition required object and the identified saliency distribution by a known method.

Next, the controller 10 acquires the actual position of the visual recognition required object and the actual saliency distribution after a specified time, and calculates a distance (for example, expressed by the Kullback-Leibler divergence) from the predicted position (the probability distribution) of each of the position of the visual recognition required object and the saliency distribution, which have been calculated earlier. The distance calculated herein is set as a surprise value for respective one of the visual recognition required object and the saliency distribution. In other words, as the distance between the predicted position and the actual position of each of the position of the visual recognition required object and the saliency distribution is increased, the surprise to the driver is increased. Thus, the driver in the normal state is highly likely to direct his/her sightline.

Then, the controller 10 calculates the search behavior score from the calculated surprise value such that the search behavior score is increased as a tendency of the driver's sightline to be directed at the object with the relatively high surprise value is increased. For example, the controller 10 generates a receiver operating characteristic (ROC) curve by plotting a probability that the surprise value in the driver's sightline direction exceeds the specified threshold and a probability that the surprise value at a random point in front of the vehicle 1 exceeds the specified threshold while changing the specified threshold. Then, the controller 10 sets the search behavior score by multiplying an area under the curve (AUC) of the ROC curve by a specified coefficient. In this case, as the tendency of the driver's sightline to be directed to the object with the high surprise value is increased, the AUC is increased, and the search behavior score is increased.

Next, the controller 10 calculates the driver's distracted state level on the basis of the search behavior score and an elapsed time with the search behavior score (step S8). More specifically, a distracted state level map in which a distracted state level is set is stored in the memory 10b in advance. The distracted state level corresponds to the search behavior score and the elapsed time with the search behavior score. Fig. 8 is a map exemplifying the distracted state level map. In the example illustrated in Fig. 8, it is set that the distracted state level is increased as the search behavior score is reduced and that the distracted state level is increased as the elapsed time is increased. This is because, when a low state of the search behavior score, that is, a low state of the tendency of the driver's sightline to be directed to the object with the high surprise value continues for a long time, the driver is highly likely to be in the distracted state. Every time the controller 10 calculates the search behavior score in the driver state determination processing, which is executed repeatedly, the controller 10 stores the search behavior score and time of calculation. Then, after calculating the search behavior score in step S7, the controller 10 refers to the distracted state level map and acquires the distracted state level that corresponds to the search behavior score calculated in step S7 and a time in which the search behavior score remains the same (the elapsed time) .

Next, the controller 10 determines whether the distracted state level calculated in step S8 is equal to or higher than a specified threshold (step S9). For example, in the case where the distracted state level map illustrated in Fig. 8 is used, the threshold is set to 1. As a result, if the distracted state level is not equal to or higher than the threshold (is lower than the threshold) (step S9: NO), the controller 10 determines that the driver is in the normal state (step S10), and terminates the driver state determination processing.

On the other hand, if the distracted state level is equal to or higher than the threshold (step S9: YES), the controller 10 determines whether the search behavior score has been increased in response to the increase in the driving load score (step S11). More specifically, every time the controller 10 acquires the driving load score and the search behavior score in the driver state determination processing, which is executed repeatedly, the controller 10 stores the driving load score, the search behavior score, and the time of acquisition of each thereof. Then, the controller 10 identifies, in time-series data, a change in the search behavior score in a period in which the increased state of the driving load score is maintained. Fig. 9 is a graph exemplifying the change in the search behavior score at the time with the high driving load according to this embodiment. As indicated by a one-dot chain line in Fig. 9, in the case where the search behavior score is increased while the increased state of the driving load score is maintained, the controller 10 determines that the search behavior score has been increased in response to the increase in the driving load score.

That the search behavior score is increased in response to the increase in the driving load score means that, when the driving load is increased and a behavior request for the driver is enhanced, the driver can take the normal search behavior in response thereto. That is, it is considered that a reason why the search behavior score is low and the distracted state level is high prior the increase in the driving load is not because the driver suffers from abnormality such as the disease but because the driver is in the distracted state. Thus, if the search behavior score is increased in response to the increase in the driving load score (step S11: YES), the controller 10 determines that the driver is in the distracted state (step S12).

Next, the controller 10 transmits the control signal to the display 36 and the speaker 37, and causes each of the display 36 and the speaker 37 to output a warning for notifying the driver that the driver is in the distracted state (step S13). At this time, the controller 10 may cause the display 36 and the speaker 37 to respectively output the image information and the voice information (sightline guidance information) for guiding the driver's sightline to the visual recognition required object not visually recognized by the driver. After step S13, the controller 10 terminates the driver state determination processing.

Meanwhile, as indicated by a dotted line in the example illustrated in Fig. 9, if the search behavior score has not been increased in response to the increase in the driving load score (step S11: NO), it means that, even when the behavior request for the driver is enhanced due to the increased driving load, the driver cannot take the normal search behavior in response thereto. That is, it is considered that the reason why the search behavior score is low and the distracted state level is high prior the increase in the driving load is because the driver suffers from the abnormality such as the disease. Thus, the controller 10 determines that the driver is in an abnormal state (step S14) .

In this case, the controller 10 transmits, to the PCM 33, the DSC 34, and the EPS 35, the control signal for appropriately actuating the drive power source 2, the transmission 3, the brake 4, and the steering device 5, and executes driving assistance control of the vehicle 1 such that the vehicle 1 is safely stopped on a road shoulder, for example (step S15). In addition, the controller 10 may transmit the control signal to the display 36 and the speaker 37 to cause the display 36 and the speaker 37 to output the warning. After step S15, the controller 10 terminates the driver state determination processing.

### [Operational Effects]

Next, a description will be made on operational effects of the driver state determination apparatus 100 in the above-described embodiment.

The controller 10 acquires the distracted state occurrence score, which represents the degree of likelihood that the driver is brought into the distracted state, on the basis of the driving load score and the elapsed time with the driving load score. Thus, in a situation where the driver is likely to be in the distracted state according to the driving load, it is possible to promptly determine whether the driver is in the distracted state. In addition, in the case where the distracted state occurrence score is equal to or higher than the specified value, the controller 10 acquires the search behavior score, which represents the degree of normality of the search behavior by the driver's visual perception, on the basis of the travel environment information and the driver's sightline. Then, the controller 10 acquires the distracted state level of the driver on the basis of the search behavior score and the elapsed time with the search behavior score. Thus, it is possible to promptly determine the distracted state on the basis of the degree of normality of the search behavior, which is easily affected by the distracted state. Furthermore, in the case where the distracted state level is equal to or higher than the threshold, and the search behavior score is increased in response to the increase in the driving load score, the controller 10 determines that the driver is in the distracted state. Thus, it is possible to accurately determine the distracted state by focusing on the change that appears characteristically at the time when the driver is in the distracted state but not in the abnormal state (that the search behavior becomes normal when the driving load is increased and thus the behavior request for the driver is enhanced) and distinguishing such a change from the change in the abnormal state. In this way, it is possible to distinguish the driver's distracted state from another abnormal state, such as the disease, and promptly and accurately determine the driver's distracted state.

The controller 10 acquires the driving load score on the basis of the cognitive load score and the operation load score. Thus, it is possible to evaluate a magnitude of the driving load in consideration of the cognitive load and the operation load, which affect likelihood of the occurrence of the distracted state. Thus, it is possible to acquire the further accurate distracted state occurrence score.

The controller 10 acquires the surprise value on the basis of the travel environment information. Then, the controller 10 calculates the search behavior score such that the search behavior score is increased as the tendency of the driver's sightline to be directed to the object with the relatively high surprise value is increased. In this way, the driver's search behavior score is calculated on the basis of a behavioral principle of a person that the driver in the normal state directs his/her sightline to the object with the relatively high surprise value. Thus, it is possible to acquire the search behavior score, to which the driver's state is further accurately reflected.

### [Description of Reference Signs and Numerals]

- 1: Vehicle
- 10: Controller
- 100: Driver state determination apparatus
- 21: Outside camera
- 22: Radar
- 23: Navigation system
- 24: Positioning system
- 25: Vehicle speed sensor
- 26: Acceleration sensor
- 27: Yaw rate sensor
- 28: Steering angle sensor
- 29: Steering torque sensor
- 30: Accelerator sensor
- 31: Brake sensor
- 32: In-vehicle camera
- 36: Display
- 37: Speaker

## Claims

1. A driver state determination apparatus (100) for determining a state of a driver who drives a vehicle (1), the driver state determination apparatus (100) comprising:
a travel environment information acquisition device configured to acquire travel environment information of the vehicle (1);
a sightline detector configured to detect a driver's sightline; and
a controller (10) configured to determine the driver's state on the basis of the travel environment information and the driver's sightline, wherein
the controller (10) is configured to:
acquire a driving load score on the basis of the travel environment information, the driving load score representing a magnitude of a load on the driver during driving of the vehicle;
acquire a distracted state occurrence score on the basis of the driving load score and an elapsed time with the driving load score, the distracted state occurrence score representing a degree of likelihood that the driver is brought into a distracted state;
acquire a search behavior score on the basis of the travel environment information and the driver's sightline in the case where the distracted state occurrence score is equal to or higher than a specified value, the search behavior score representing a degree of normality of search behavior by the driver's visual perception;
acquire a distracted state level of the driver on the basis of the search behavior score and an elapsed time with the search behavior score; and
determine that the driver is in the distracted state in the case where the distracted state level is equal to or higher than a threshold and where the search behavior score is increased in response to an increase in the driving load score.

2. The driver state determination apparatus according to claim 1, wherein
the controller (10) is configured to
acquire a cognitive load score and an operation load score on the basis of the travel environment information and acquire the driving load score on the basis of the cognitive load score and the operation load score, the cognitive load score representing a magnitude of a load on the driver to recognize an object in travel environment of the vehicle (1), and the operation load score representing a magnitude of a load to operate the vehicle (1) in the travel environment.

3. The driver state determination apparatus according to claim 2, wherein
the controller (10) is configured to
acquire a surprise value on the basis of the travel environment information, and calculate the search behavior score such that the search behavior score is increased as a tendency of the driver's sightline to be directed to the object with the relatively high surprise value is increased, the surprise value representing a distance between a predicted position and an actual position of the object that attracts the driver's attention.

4. The driver state determination apparatus according to any one of the preceding claims, wherein the travel environment information acquisition device includes at least one of an outside camera (21), a radar (22), a navigation system (23) or a positioning system (24), and preferably additionally at least one of a vehicle speed sensor (25), acceleration sensor (26), yaw rate sensor (27), steering angle sensor (28), steering torque sensor (29), accelerator sensor (30) or a brake sensor (31); and /or the sightline detector is an in-vehicle camera (32) and the controller is adapted to detect the driver's sightline direction on the basis of the image data received from the in-vehicle camera (32).

5. The driver state determination apparatus according to any one of claims 2 to 4, wherein the controller (10) is configured to acquire the cognitive load score by use of a cognitive load score table stored in a memory (10b) in advance, in the cognitive load score table factors, each of which affects the driver's cognitive load, are each associated with scores, each of which represents a magnitude of the cognitive load corresponding to each of the factors, wherein as a factor preferably at least one of a number of the objects to be seen by the driver during driving, an angle between the objects, a degree of saliency of the object and a moving speed of the object.

6. The driver state determination apparatus according to any one of claims 2 to 5, wherein the controller (10) is configured to acquire the operation load score by use of an operation load score table stored in a memory (10b) in advance, in the operation load score table, factors, each of which affects the driver's operation load, are each associated with scores, each of which represents a magnitude of the operation load corresponding to each of the factors, wherein as a factor preferably at least one of a radius of curvature of a road curve, a presence or absence of loss of an own lane, a signal color and deceleration of the preceding vehicle are set.

7. The driver state determination apparatus according to any one of the preceding claims, wherein the controller (10) is configured to acquire the distracted state occurrence score by use of a distracted state occurrence score map in which a distracted state occurrence score is stored in the memory (10b) in advance, wherein in the table, the distracted state occurrence score is preferably increased as the driving load score is reduced and the distracted state occurrence score is preferably increased as the elapsed time is increased.

8. The driver state determination apparatus according to claim 3, wherein, for acquiring the surprise value, the controller is configured to, based on the signals received from the outside camera (21) and the radar (22), identify a position of a visual recognition required object that should be recognized visually by the driver and/or a distribution of saliency in front of the vehicle (1), wherein the controller (10) is further configured to calculate the predicted position after a specified time of each of the identified position of the visual recognition required object and a saliency distribution.

9. The driver state determination apparatus according to claim 8, wherein the controller (10) is configured to determine that the driver is in the normal state and to terminate the driver state determination processing if the distracted state level is not equal to or higher than the threshold.

10. The driver state determination apparatus according to any one of the preceding claims, wherein the controller (10) is configured to store the driving load score, the search behavior score and the time of acquisition of each thereof every time the controller (10) acquires the driving load score and the search behavior score in the driver state determination processing.

11. The driver state determination apparatus according to claim 10, wherein the controller is configured identify in time-series data of a change in the search behavior score in a period in which the increased state of the driving load score is maintained and is further configured to determine that the search behavior score is increased in response to an increase in the driving load score when the search behavior score is increased while the increased state of the driving load score is maintained.

12. The driver state determination apparatus according to any one of the preceding claims, wherein the controller (10) is configured to transmit a control signal to a display (36) and/or a speaker 37 of the vehicle (1), the control signal being capable of causing a warning output on the display (36) and/or by the speaker (37) for notifying the driver about detection of the distracted state, in particular the controller (10) is configured to cause the display (36) and the speaker (37) to respectively output an image information and/or the voice information for guiding the driver's sightline to the visual recognition required object not visually recognized by the driver.

13. The driver state determination apparatus according to any one of the preceding claims, wherein the controller (10) is configured to determine that the driver is in an abnormal state, in particular suffers from a disease, when the distracted state level is equal to or higher than a threshold and where the search behavior score is not increased, in particular is below a defined upper threshold, in response to an increase in the driving load score; wherein the controller (10) is preferably further configured to generate and transmit a control signal for safely stopping the vehicle.

14. A vehicle including at least one driver state determination apparatus according to any one of the preceding claims.

15. A method of determining a state of a driver who drives a vehicle (1) by use of a driver state determination apparatus (100) according to any of the preceding claims, the method comprising the steps:
acquiring travel environment information of the vehicle (1);
detecting the a driver's sightline; and
determining the driver's state on the basis of the travel environment information and the driver's sightline;
acquiring a driving load score on the basis of the travel environment information, the driving load score representing a magnitude of a load on the driver during driving of the vehicle;
acquiring a distracted state occurrence score on the basis of the driving load score and an elapsed time with the driving load score, the distracted state occurrence score representing a degree of likelihood that the driver is brought into a distracted state;
acquiring a search behavior score on the basis of the travel environment information and the driver's sightline in the case where the distracted state occurrence score is equal to or higher than a specified value, the search behavior score representing a degree of normality of search behavior by the driver's visual perception;
acquiring a distracted state level of the driver on the basis of the search behavior score and an elapsed time with the search behavior score; and
determining that the driver is in the distracted state in the case where the distracted state level is equal to or higher than a threshold and where the search behavior score is increased in response to an increase in the driving load score.

## Patentansprüche

1. Vorrichtung (100) zur Bestimmung des Fahrerzustands zur Bestimmung eines Zustands eines Fahrers, der ein Fahrzeug (1) führt, wobei die Vorrichtung (100) zur Bestimmung des Fahrerzustands umfasst:
eine Erfassungseinrichtung für Fahrumgebungsinformationen, die dazu konfiguriert ist, Fahrumgebungsinformationen des Fahrzeugs (1) zu erfassen;
einen Blickliniendetektor, der dazu konfiguriert ist, die Blicklinie eines Fahrers zu detektieren; und
einen Controller (10), der dazu konfiguriert ist, den Zustand des Fahrers auf der Grundlage der Fahrumgebungsinformationen und der Blicklinie des Fahrers zu bestimmen, wobei
der Controller (10) dazu konfiguriert ist:
einen Fahrbelastungs-Score auf der Grundlage der Fahrumgebungsinformationen zu erfassen, wobei der Fahrbelastungs-Score eine Größe einer Belastung des Fahrers während des Führens des Fahrzeugs darstellt;
einen Ablenkungszustands-Auftretens-Score auf der Grundlage des Fahrbelastungs-Scores und einer verstrichenen Zeit mit dem Fahrbelastungs-Score zu erfassen, wobei der Ablenkungszustands-Auftretens-Score einen Grad der Wahrscheinlichkeit darstellt, dass der Fahrer in einen abgelenkten Zustand gebracht wird;
einen Suchverhaltens-Score auf der Grundlage der Fahrumgebungsinformationen und der Blicklinie des Fahrers in dem Fall zu erfassen, dass der Ablenkungszustands-Auftretens-Score gleich oder höher als ein spezifizierter Wert ist, wobei der Suchverhaltens-Score einen Grad der Normalität des Suchverhaltens durch die visuelle Wahrnehmung des Fahrers darstellt;
ein Ablenkungszustands-Level des Fahrers auf der Grundlage des Suchverhaltens-Scores und einer verstrichenen Zeit mit dem Suchverhaltens-Score zu erfassen; und
zu bestimmen, dass sich der Fahrer in dem abgelenkten Zustand befindet, in dem Fall, dass das Ablenkungszustands-Level gleich oder höher als ein Schwellenwert ist und dass der Suchverhaltens-Score als Reaktion auf eine Erhöhung des Fahrbelastungs-Scores erhöht wird.

2. Vorrichtung zur Bestimmung des Fahrerzustands nach Anspruch 1, wobei
der Controller (10) dazu konfiguriert ist,
einen kognitiven Belastungs-Score und einen Bedienbelastungs-Score auf der Grundlage der Fahrumgebungsinformationen zu erfassen und den Fahrbelastungs-Score auf der Grundlage des kognitiven Belastungs-Scores und des Bedienbelastungs-Scores zu erfassen, wobei der kognitive Belastungs-Score eine Größe einer Belastung des Fahrers darstellt, um ein Objekt in der Fahrumgebung des Fahrzeugs (1) zu erkennen, und wobei der Bedienbelastungs-Score eine Größe einer Belastung darstellt, um das Fahrzeug (1) in der Fahrumgebung zu bedienen.

3. Vorrichtung zur Bestimmung des Fahrerzustands nach Anspruch 2, wobei
der Controller (10) dazu konfiguriert ist,
einen Überraschungswert auf der Grundlage der Fahrumgebungsinformationen zu erfassen und den Suchverhaltens-Score derart zu berechnen, dass der Suchverhaltens-Score erhöht wird, wenn eine Tendenz der Blicklinie des Fahrers, auf das Objekt mit dem relativ hohen Überraschungswert gerichtet zu werden, erhöht wird, wobei der Überraschungswert eine Distanz zwischen einer vorhergesagten Position und einer tatsächlichen Position des Objekts darstellt, das die Aufmerksamkeit des Fahrers anzieht.

4. Vorrichtung zur Bestimmung des Fahrerzustands nach einem der vorhergehenden Ansprüche, wobei die Erfassungseinrichtung für Fahrumgebungsinformationen mindestens eine von einer Außenkamera (21), einem Radar (22), einem Navigationssystem (23) oder einem Positionierungssystem (24) umfasst, und vorzugsweise zusätzlich mindestens eine von einem Fahrzeuggeschwindigkeitssensor (25), einem Beschleunigungssensor (26), einem Gierratensensor (27), einem Lenkwinkelsensor (28), einem Lenkmomentsensor (29), einem Gaspedalsensor (30) oder einem Bremssensor (31); und/oder der Blickliniendetektor eine Fahrzeuginnenkamera (32) ist und der Controller angepasst ist, die Blicklinienrichtung des Fahrers auf der Grundlage der von der Fahrzeuginnenkamera (32) empfangenen Bilddaten zu detektieren.

5. Vorrichtung zur Bestimmung des Fahrerzustands nach einem der Ansprüche 2 bis 4, wobei der Controller (10) dazu konfiguriert ist, den kognitiven Belastungs-Score unter Verwendung einer kognitiven Belastungs-Score-Tabelle zu erfassen, die im Speicher (10b) im Voraus gespeichert ist, wobei in der kognitiven Belastungs-Score-Tabelle Faktoren, von denen jeder die kognitive Belastung des Fahrers beeinflusst, jeweils Scores zugeordnet sind, von denen jeder eine Größe der kognitiven Belastung entsprechend jedem der Faktoren darstellt, wobei als Faktor vorzugsweise mindestens einer von einer Anzahl der Objekte, die vom Fahrer während des Fahrens zu sehen sind, einem Winkel zwischen den Objekten, einem Grad der Salienz des Objekts und einer Bewegungsgeschwindigkeit des Objekts.

6. Vorrichtung zur Bestimmung des Fahrerzustands nach einem der Ansprüche 2 bis 5, wobei der Controller (10) dazu konfiguriert ist, den Bedienbelastungs-Score unter Verwendung einer Bedienbelastungs-Score-Tabelle zu erfassen, die im Speicher (10b) im Voraus gespeichert ist, wobei in der Bedienbelastungs-Score-Tabelle Faktoren, von denen jeder die Bedienbelastung des Fahrers beeinflusst, jeweils Scores zugeordnet sind, von denen jeder eine Größe der Bedienbelastung entsprechend jedem der Faktoren darstellt, wobei als Faktor vorzugsweise mindestens einer von einem Krümmungsradius einer Straßenkurve, einem Vorhandensein oder Nichtvorhandensein eines Verlassens der eigenen Fahrspur, einer Signalfarbe und einer Verzögerung des Vorausfahrzeugs festgelegt ist.

7. Vorrichtung zur Bestimmung des Fahrerzustands nach einem der vorhergehenden Ansprüche, wobei der Controller (10) dazu konfiguriert ist, den Ablenkungszustands-Auftretens-Score unter Verwendung einer Ablenkungszustands-Auftretens-Score-Karte zu erfassen, in der ein Ablenkungszustands-Auftretens-Score im Speicher (10b) im Voraus gespeichert ist, wobei in der Tabelle der Ablenkungszustands-Auftretens-Score vorzugsweise erhöht wird, wenn der Fahrbelastungs-Score reduziert wird, und der Ablenkungszustands-Auftretens-Score vorzugsweise erhöht wird, wenn die verstrichene Zeit erhöht wird.

8. Vorrichtung zur Bestimmung des Fahrerzustands nach Anspruch 3, wobei der Controller zum Erfassen des Überraschungswerts dazu konfiguriert ist, basierend auf den von der Außenkamera (21) und dem Radar (22) empfangenen Signalen, eine Position eines Objekts, dessen visuelle Erkennung erforderlich ist, das vom Fahrer visuell erkannt werden sollte, und/oder eine Verteilung der Salienz vor dem Fahrzeug (1) zu identifizieren, wobei der Controller (10) ferner dazu konfiguriert ist, die vorhergesagte Position nach einer spezifizierten Zeit für jede der identifizierten Position des Objekts, dessen visuelle Erkennung erforderlich ist, und eine Salienzverteilung zu berechnen.

9. Vorrichtung zur Bestimmung des Fahrerzustands nach Anspruch 8, wobei der Controller (10) dazu konfiguriert ist, zu bestimmen, dass sich der Fahrer in dem normalen Zustand befindet und die Verarbeitung zur Bestimmung des Fahrerzustands zu beenden, wenn das Ablenkungszustands-Level nicht gleich oder höher als der Schwellenwert ist.

10. Vorrichtung zur Bestimmung des Fahrerzustands nach einem der vorhergehenden Ansprüche, wobei der Controller (10) dazu konfiguriert ist, den Fahrbelastungs-Score, den Suchverhaltens-Score und die Zeit der Erfassung jedes davon jedes Mal zu speichern, wenn der Controller (10) den Fahrbelastungs-Score und den Suchverhaltens-Score in der Verarbeitung zur Bestimmung des Fahrerzustands erfasst.

11. Vorrichtung zur Bestimmung des Fahrerzustands nach Anspruch 10, wobei der Controller dazu konfiguriert ist, in Zeitreihendaten einer Änderung des Suchverhaltens-Scores in einem Zeitraum zu identifizieren, in dem der erhöhte Zustand des Fahrbelastungs-Scores aufrechterhalten wird, und ferner dazu konfiguriert ist, zu bestimmen, dass der Suchverhaltens-Score als Reaktion auf eine Erhöhung des Fahrbelastungs-Scores erhöht wird, wenn der Suchverhaltens-Score erhöht wird, während der erhöhte Zustand des Fahrbelastungs-Scores aufrechterhalten wird.

12. Vorrichtung zur Bestimmung des Fahrerzustands nach einem der vorhergehenden Ansprüche, wobei der Controller (10) dazu konfiguriert ist, ein Steuersignal an ein Display (36) und/oder einen Lautsprecher 37 des Fahrzeugs (1) zu übertragen, wobei das Steuersignal geeignet ist, eine Warn-Ausgabe auf dem Display (36) und/oder durch den Lautsprecher (37) zu bewirken, um den Fahrer über die Detektion des abgelenkten Zustands zu benachrichtigen, insbesondere ist der Controller (10) dazu konfiguriert, zu bewirken, dass das Display (36) und der Lautsprecher (37) jeweils eine Bildinformation und/oder die Sprachinformation zur Führung der Blicklinie des Fahrers zu dem Objekt, dessen visuelle Erkennung erforderlich ist, das vom Fahrer nicht visuell erkannt wird, ausgeben.

13. Vorrichtung zur Bestimmung des Fahrerzustands nach einem der vorhergehenden Ansprüche, wobei der Controller (10) dazu konfiguriert ist, zu bestimmen, dass sich der Fahrer in einem abnormalen Zustand befindet, insbesondere an einer Krankheit leidet, wenn das Ablenkungszustands-Level gleich oder höher als ein Schwellenwert ist und wenn der Suchverhaltens-Score nicht erhöht wird, insbesondere unterhalb eines definierten oberen Schwellenwerts liegt, als Reaktion auf eine Erhöhung des Fahrbelastungs-Scores; wobei der Controller (10) vorzugsweise ferner dazu konfiguriert ist, ein Steuersignal zum sicheren Anhalten des Fahrzeugs zu erzeugen und zu übertragen.

14. Fahrzeug, das mindestens eine Vorrichtung zur Bestimmung des Fahrerzustands nach einem der vorhergehenden Ansprüche umfasst.

15. Verfahren zur Bestimmung eines Zustands eines Fahrers, der ein Fahrzeug (1) führt, unter Verwendung einer Vorrichtung (100) zur Bestimmung des Fahrerzustands nach einem der vorhergehenden Ansprüche, wobei das Verfahren die Schritte umfasst:
Erfassen von Fahrumgebungsinformationen des Fahrzeugs (1);
Detektieren der Blicklinie eines Fahrers; und
Bestimmen des Zustands des Fahrers auf der Grundlage der Fahrumgebungsinformationen und der Blicklinie des Fahrers;
Erfassen eines Fahrbelastungs-Scores auf der Grundlage der Fahrumgebungsinformationen, wobei der Fahrbelastungs-Score eine Größe einer Belastung des Fahrers während des Führens des Fahrzeugs darstellt;
Erfassen eines Ablenkungszustands-Auftretens-Scores auf der Grundlage des Fahrbelastungs-Scores und einer verstrichenen Zeit mit dem Fahrbelastungs-Score, wobei der Ablenkungszustands-Auftretens-Score einen Grad der Wahrscheinlichkeit darstellt, dass der Fahrer in einen abgelenkten Zustand gebracht wird;
Erfassen eines Suchverhaltens-Scores auf der Grundlage der Fahrumgebungsinformationen und der Blicklinie des Fahrers in dem Fall, dass der Ablenkungszustands-Auftretens-Score gleich oder höher als ein spezifizierter Wert ist, wobei der Suchverhaltens-Score einen Grad der Normalität des Suchverhaltens durch die visuelle Wahrnehmung des Fahrers darstellt;
Erfassen eines Ablenkungszustands-Levels des Fahrers auf der Grundlage des Suchverhaltens-Scores und einer verstrichenen Zeit mit dem Suchverhaltens-Score; und
Bestimmen, dass sich der Fahrer in dem abgelenkten Zustand befindet, in dem Fall, dass das Ablenkungszustands-Level gleich oder höher als ein Schwellenwert ist und dass der Suchverhaltens-Score als Reaktion auf eine Erhöhung des Fahrbelastungs-Scores erhöht wird.

## Revendications

1. Un dispositif (100) de détermination de l'état du conducteur pour déterminer un état d'un conducteur qui conduit un véhicule (1), le dispositif (100) de détermination de l'état du conducteur comprenant :
une unité d'acquisition d'informations sur l'environnement de conduite, configurée pour acquérir des informations sur l'environnement de conduite du véhicule (1) ;
un détecteur de ligne de regard, configuré pour détecter la ligne de regard d'un conducteur ; et
un contrôleur (10), configuré pour déterminer l'état du conducteur sur la base des informations sur l'environnement de conduite et de la ligne de regard du conducteur,
le contrôleur (10) étant configuré pour :
acquérir un score de charge de conduite sur la base des informations sur l'environnement de conduite, le score de charge de conduite représentant une grandeur d'une charge du conducteur pendant la conduite du véhicule ;
acquérir un score d'occurrence de l'état de distraction sur la base du score de charge de conduite et d'un temps écoulé avec le score de charge de conduite, le score d'occurrence de l'état de distraction représentant un degré de probabilité que le conducteur soit amené dans un état distrait ;
acquérir un score de comportement de recherche sur la base des informations sur l'environnement de conduite et de la ligne de regard du conducteur dans le cas où le score d'occurrence de l'état de distraction est égal ou supérieur à une valeur spécifiée, le score de comportement de recherche représentant un degré de normalité du comportement de recherche par la perception visuelle du conducteur ;
acquérir un niveau d'état de distraction du conducteur sur la base du score de comportement de recherche et d'un temps écoulé avec le score de comportement de recherche ; et
déterminer que le conducteur est dans l'état distrait dans le cas où le niveau d'état de distraction est égal ou supérieur à un seuil et où le score de comportement de recherche est augmenté en réponse à une augmentation du score de charge de conduite.

2. Le dispositif de détermination de l'état du conducteur selon la revendication 1, dans lequel
le contrôleur (10) est configuré pour
acquérir un score de charge cognitive et un score de charge opérationnelle sur la base des informations sur l'environnement de conduite, et acquérir le score de charge de conduite sur la base du score de charge cognitive et du score de charge opérationnelle, le score de charge cognitive représentant une grandeur d'une charge du conducteur pour reconnaître un objet dans l'environnement de conduite du véhicule (1), et le score de charge opérationnelle représentant une grandeur d'une charge pour manœuvrer le véhicule (1) dans l'environnement de conduite.

3. Le dispositif de détermination de l'état du conducteur selon la revendication 2, dans lequel
le contrôleur (10) est configuré pour
acquérir une valeur de surprise sur la base des informations sur l'environnement de conduite, et calculer le score de comportement de recherche de sorte que le score de comportement de recherche soit augmenté lorsqu'une tendance de la ligne de regard du conducteur à être dirigée vers l'objet ayant la valeur de surprise relativement élevée est augmentée, la valeur de surprise représentant une distance entre une position prédite et une position réelle de l'objet qui attire l'attention du conducteur.

4. Le dispositif de détermination de l'état du conducteur selon l'une quelconque des revendications précédentes, dans lequel l'unité d'acquisition d'informations sur l'environnement de conduite comprend au moins l'un d'une caméra extérieure (21), d'un radar (22), d'un système de navigation (23) ou d'un système de positionnement (24), et de préférence comprend en outre au moins l'un d'un capteur de vitesse du véhicule (25), d'un capteur d'accélération (26), d'un capteur de vitesse de lacet (27), d'un capteur d'angle de braquage (28), d'un capteur de couple de direction (29), d'un capteur de pédale d'accélérateur (30) ou d'un capteur de frein (31) ; et/ou le détecteur de ligne de regard est une caméra intérieure du véhicule (32), et le contrôleur est adapté pour détecter la direction de la ligne de regard du conducteur sur la base des données d'image reçues de la caméra intérieure du véhicule (32).

5. Le dispositif de détermination de l'état du conducteur selon l'une quelconque des revendications 2 à 4, dans lequel le contrôleur (10) est configuré pour acquérir le score de charge cognitive en utilisant une table de score de charge cognitive stockée à l'avance dans la mémoire (10b), dans laquelle, dans la table de score de charge cognitive, des facteurs, dont chacun influence la charge cognitive du conducteur, se voient respectivement attribuer des scores, dont chacun représente une grandeur de la charge cognitive correspondant à chacun des facteurs, le facteur étant de préférence au moins l'un d'un nombre d'objets à voir par le conducteur pendant la conduite, d'un angle entre les objets, d'un degré de saillance de l'objet et d'une vitesse de déplacement de l'objet.

6. Le dispositif de détermination de l'état du conducteur selon l'une quelconque des revendications 2 à 5, dans lequel le contrôleur (10) est configuré pour acquérir le score de charge opérationnelle en utilisant une table de score de charge opérationnelle stockée à l'avance dans la mémoire (10b), dans laquelle, dans la table de score de charge opérationnelle, des facteurs, dont chacun influence la charge opérationnelle du conducteur, se voient respectivement attribuer des scores, dont chacun représente une grandeur de la charge opérationnelle correspondant à chacun des facteurs, le facteur étant de préférence au moins l'un d'un rayon de courbure d'un virage de route, de la présence ou de l'absence d'une sortie de sa propre voie, d'une couleur de signal et d'une décélération du véhicule qui précède.

7. Le dispositif de détermination de l'état du conducteur selon l'une quelconque des revendications précédentes, dans lequel le contrôleur (10) est configuré pour acquérir le score d'occurrence de l'état de distraction en utilisant une carte de score d'occurrence de l'état de distraction dans laquelle un score d'occurrence de l'état de distraction est stocké à l'avance dans la mémoire (10b), dans laquelle, dans la table, le score d'occurrence de l'état de distraction est de préférence augmenté lorsque le score de charge de conduite est réduit, et le score d'occurrence de l'état de distraction est de préférence augmenté lorsque le temps écoulé est augmenté.

8. Le dispositif de détermination de l'état du conducteur selon la revendication 3, dans lequel le contrôleur, pour acquérir la valeur de surprise, est configuré pour identifier, sur la base des signaux reçus de la caméra extérieure (21) et du radar (22), une position d'un objet dont la reconnaissance visuelle est requise, que le conducteur devrait reconnaître visuellement, et/ou une distribution de saillance devant le véhicule (1), le contrôleur (10) étant en outre configuré pour calculer la position prédite après un temps spécifié pour chacune de la position identifiée de l'objet dont la reconnaissance visuelle est requise et une distribution de saillance.

9. Le dispositif de détermination de l'état du conducteur selon la revendication 8, dans lequel le contrôleur (10) est configuré pour déterminer que le conducteur est dans l'état normal et terminer le traitement de détermination de l'état du conducteur lorsque le niveau d'état de distraction n'est pas égal ou supérieur au seuil.

10. Le dispositif de détermination de l'état du conducteur selon l'une quelconque des revendications précédentes, dans lequel le contrôleur (10) est configuré pour stocker le score de charge de conduite, le score de comportement de recherche et le temps d'acquisition de chacun d'eux à chaque fois que le contrôleur (10) acquiert le score de charge de conduite et le score de comportement de recherche dans le traitement de détermination de l'état du conducteur.

11. Le dispositif de détermination de l'état du conducteur selon la revendication 10, dans lequel le contrôleur est configuré pour identifier, dans des données de série temporelle d'un changement du score de comportement de recherche, une période pendant laquelle l'état augmenté du score de charge de conduite est maintenu, et est en outre configuré pour déterminer que le score de comportement de recherche est augmenté en réponse à une augmentation du score de charge de conduite lorsque le score de comportement de recherche est augmenté pendant que l'état augmenté du score de charge de conduite est maintenu.

12. Le dispositif de détermination de l'état du conducteur selon l'une quelconque des revendications précédentes, dans lequel le contrôleur (10) est configuré pour transmettre un signal de commande à un écran (36) et/ou à un haut-parleur (37) du véhicule (1), le signal de commande étant apte à provoquer une sortie d'avertissement sur l'écran (36) et/ou par le haut-parleur (37) afin de notifier au conducteur la détection de l'état distrait, en particulier le contrôleur (10) est configuré pour provoquer que l'écran (36) et le haut-parleur (37) délivrent respectivement une information d'image et/ou une information vocale pour guider la ligne de regard du conducteur vers l'objet dont la reconnaissance visuelle est requise, qui n'est pas reconnu visuellement par le conducteur.

13. Le dispositif de détermination de l'état du conducteur selon l'une quelconque des revendications précédentes, dans lequel le contrôleur (10) est configuré pour déterminer que le conducteur est dans un état anormal, en particulier souffre d'une maladie, lorsque le niveau d'état de distraction est égal ou supérieur à un seuil et lorsque le score de comportement de recherche n'est pas augmenté, en particulier est inférieur à un seuil supérieur défini, en réponse à une augmentation du score de charge de conduite ; le contrôleur (10) étant de préférence en outre configuré pour générer et transmettre un signal de commande pour arrêter le véhicule en sécurité.

14. Un véhicule comprenant au moins un dispositif de détermination de l'état du conducteur selon l'une quelconque des revendications précédentes.

15. Un procédé de détermination d'un état d'un conducteur qui conduit un véhicule (1), en utilisant un dispositif (100) de détermination de l'état du conducteur selon l'une quelconque des revendications précédentes, le procédé comprenant les étapes consistant à :
acquérir des informations sur l'environnement de conduite du véhicule (1) ;
détecter la ligne de regard d'un conducteur ; et
déterminer l'état du conducteur sur la base des informations sur l'environnement de conduite et de la ligne de regard du conducteur ;
acquérir un score de charge de conduite sur la base des informations sur l'environnement de conduite, le score de charge de conduite représentant une grandeur d'une charge du conducteur pendant la conduite du véhicule ;
acquérir un score d'occurrence de l'état de distraction sur la base du score de charge de conduite et d'un temps écoulé avec le score de charge de conduite, le score d'occurrence de l'état de distraction représentant un degré de probabilité que le conducteur soit amené dans l'état distrait ;
acquérir un score de comportement de recherche sur la base des informations sur l'environnement de conduite et de la ligne de regard du conducteur dans le cas où le score d'occurrence de l'état de distraction est égal ou supérieur à une valeur spécifiée, le score de comportement de recherche représentant un degré de normalité du comportement de recherche par la perception visuelle du conducteur ;
acquérir un niveau d'état de distraction du conducteur sur la base du score de comportement de recherche et d'un temps écoulé avec le score de comportement de recherche ; et
déterminer que le conducteur est dans l'état distrait dans le cas où le niveau d'état de distraction est égal ou supérieur à un seuil et où le score de comportement de recherche est augmenté en réponse à une augmentation du score de charge de conduite.
